# EUROPEAN PATENT SPECIFICATION

(11) **EP 0 677 987 B1**
(45) Date of publication and mention of the grant of the patent: **29.03.2000**
(21) Application number: 94905260.9
(22) Date of filing: 17.01.1994
(51) Int. Cl.: A01B 15/00

(54) **PLOUGH BEAM**
PFLUGBALKEN
TIMON DE CHARRUE

(30) Priority: 18.01.1993 NO 930165
(43) Date of publication of application: 25.10.1995
(73) Proprietor: KVERNELAND KLEPP AS, N-4344 Kvernaland (NO)
(72) Inventor: TORGRIMSEN, Tor, N-4018 Stavanger (NO)
(74) Representative: Orr, William McLean
(86) International application number: NO9400012
(87) International publication number: WO9415447

(56) References cited:
- FR-A- 1 432 657
- US-A- 4 333 536
- US-A- 5 040 616

## Description

This invention relates to a plough beam. The plough beam according to the invention may be used both for reversible ploughs and, with insignificant, obvious changes, also for non-reversible ploughs.

Plough beams have been made in very many variants. It is especially difficult to obtain reversible plough beams which are light-weight, strong and inexpensive. Particularly when a welded design is chosen, there is a risk of crack formation in the weld deposit after some time. FR-1432657 discloses a plough beam according to the preamble of claim 1 comprising plough body carriers for attachment of plough bodies. The plough body carriers are attached between side plates which are, in turn, attached to a hollow profile part. The plough beam and side plates are connected by four weld seams and three screw bolts.

The object of the invention is to provide a plough beam to a low price and which is light in weight, strong and which meets the demands that should be made on a good plough beam.

The object is achieved through the features as defined in claim 1 given below.

An embodiment of the invention shall be described below, reference being made to the attached drawings, wherein:

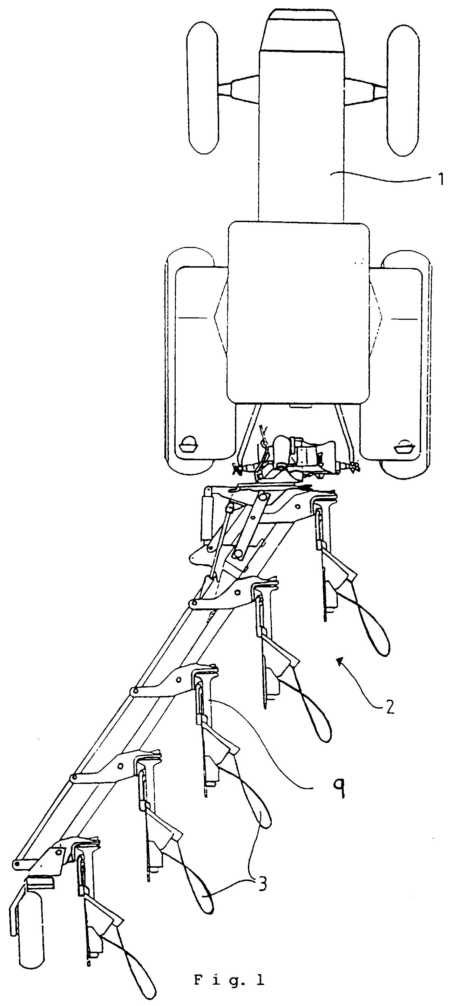

Figure 1 shows, as seen from above, a tractor equipped with a reversible plough in working position, where the plough bodies are attached to the plough beam of the invention, and where one set of plough bodies is not shown in order to simplify the matter;
Figure 2 shows, seen in side elevational view and partly in section, part of a plough beam according to the invention;
Figure 3 shows a section along the line A-A in Figure 2, bolt 21 is omitted; and
Figure 4 shows an alternative embodiment of a cushion / spring device.

In the drawings, reference numeral 1 denotes a tractor to which a reversible plough 2 has been coupled. The individual plough bodies 3 are, conventionally, attached to a substantially vertically standing plough body carrier 4, respectively 4' of a plough beam in accordance with the invention.

The above-mentioned plough body carriers 4, 4' are, by means of screw bolts 5, 6, mounted between two side plates 7, 8, which are shaped so that together they surround the rear end portion of a substantially horizontally lying part 9 of the plough beam according to the invention. The front end of the above-mentioned part 9 is attached to the plough 2 in a known manner.

The above-mentioned part 9 is, in principle, constituted by a rectangular hollow profile. The rear end portion of this hollow profile part 9 is adjusted such that an angle of 1° is formed between the uppermost and lowermost face of the hollow profile part 9.

Slots 10, 11 and 12, 13 have been formed in both side plates 7, 8. The slots are located at the same angle, 1°, as the angle which the rear end portion of the hollow profile part 9 has been adjusted for. The portions 14, 15 and 16, 17 of the side plates 7, 8 in which the slots 10, 11 and 12, 13 are formed, are not pressed out in order to surround the rear portion of the hollow profile part 9. The free edges 18 of these portions form rests for substantially horizontally lying intermediate plates 19, 20. The plates 19, 20 have mainly the same width as the hollow profile part 9, and rest against the lowermost and uppermost faces of the rear end portion of the hollow profile part 9.

After the plough body carriers 4, 4' are screwed together with the side plates 7, 8, all of this substantially vertically standing part 4, 4', 7, 8 of the plough beam is threaded onto the rear end portion of the substantially horizontally lying hollow profile part 9 of the plough beam. The intermediate plates 19, 20 are placed therebetween as explained above and shown in the drawings. Due to the fact that the rear end of the hollow profile part 9 functions as a wedge, it is possible to obtain a very good press connection between these parts. The intermediate plates 19 and 20 distribute the forces evenly across the press faces of the hollow profile part 9. Upon strain on plough body 3 during ploughing, the bending moment will be accommodated and distributed on the intermediate plates 19, 20, wherein the least possible tension concentration at the transition between the side plates 7, 8 and the hollow profile part 9 is obtained. A through-going bolt 21 secures against axial motion between the vertically standing part and the horizontally lying part of the plough beam.

Naturally, the intermediate plates 19, 20 may be omitted and, then, the hollow profile part 9 presses directly against the free edges 18, but this is a connection which is not as good as the one described above.

All parts are made from high endurance, high tensile material. In this way, a light and strong plough beam is achieved. Additionally to the possible arrangement of a stone release device in association to the hollow profile part 9, the screw bolt 5 or 6 may have the form of a shear pin, which will be sheared off in case the plough body 3 should get completely stuck, so that the plough body carrier 4 with the plough body 3 will rotate around the screw bolt 6 respectively 5, so that the plough body 3 can be released. Of course, thereafter, a new shear pin 5 respectively 6 has to be mounted.

Of course, when using a shear bolt 5 or 6, the side edges at the rear edge of the side plates 7, 8 shown in the drawings and being bent towards each other, have to be differently shaped in order to allow rotation of the plough body carrier 4. In order to maintain desirable rigidity within the side plates, said side edges may simply be bent the other way.

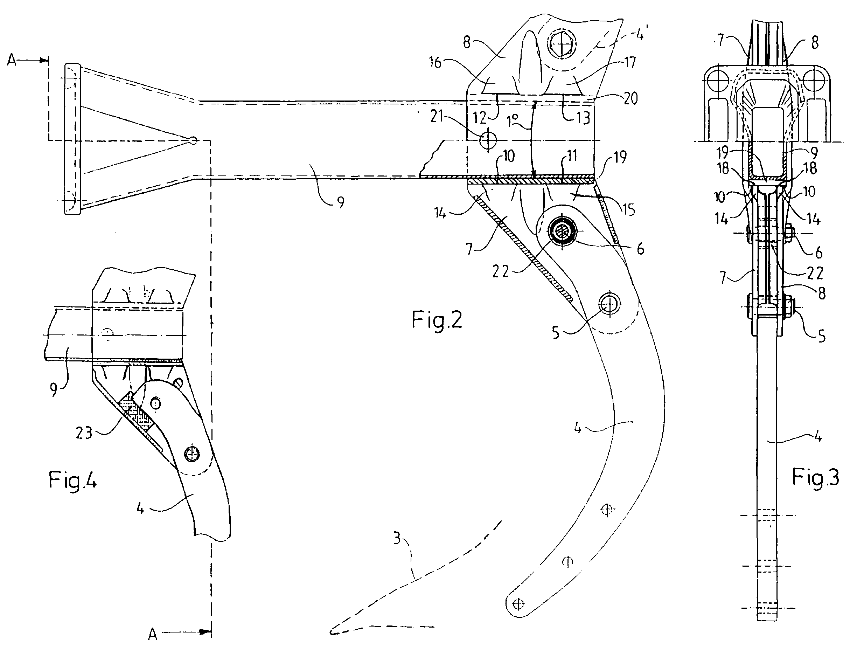

Also, cushion / spring members may be inserted, as indicated at reference numeral 22 in Figures 2 and 3, or as indicated at reference numeral 23 in Figure 4, so that the plough bodies 3 may resile somewhat, especially when the largest loads occur. This will reduce the load peaks in the plough system a little and will, moreover, result in a smoother running within the entire plough.

## Claims

1. A plough beam, especially for a reversible plough, comprising
plough body carriers (4, 4') for attachment of plough bodies (3);
the plough body carriers (4, 4')being attached between side plates (7, 8) which are, in turn, attached to a hollow profile part (9)
characterised in that
the hollow profile part (9) slightly tapers towards its rear end;
the side plates (7, 8) being arranged to surround the tapered portion of the hollow profile part (9); and
the side plates (7, 8) forming an aperture complementary to the slightly tapered portion of the hollow profile part (9) such that said slightly tapered portion of the hollow profile part (9) functions as a wedge and ensures a press connection between the hollow profile part (9) and the side plates (7, 8).

2. A plough beam as claimed in claim 1, further comprising a through-going bolt (21) penetrating said hollow profile part (9) and portions of said side plates (7, 8);
the through-going bolt (21) securing against axial movement between the hollow profile part (9) and the side plates (7, 8).

3. A plough beam as claimed in claim 1, wherein slots (10, 11, 12, 13) are formed in each side plate (7, 8);
each slot (10, 11, 12, 13) having a free edge (18) at the same angle as the tapered portion of the hollow profile part (9);
each free edge (18) being formed to provide a rest for the slightly tapered portion of the hollow profile part (9) of the plough beam.

4. A plough beam as set forth in claim 3, characterised in that intermediate plates (19, 20) are placed between the free edges (18) of the slots in the side plates (7, 8) and the slightly tapered portion of the hollow profile part (9).

5. A plough beam as set forth in one or more of the preceding claims, characterised in that the plough beam is equipped with shear bolts (5 or 6), known per se.

6. A plough beam set forth in one or more of the preceding claims, characterized in that the plough beam is equipped with cushion / spring elements (22 and / or 23), known per se.

## Patentansprüche

1. Pflugbalken, insbesondere für Drehpflüge, mit Pflugscharträgern (4,4') zum Befestigen von Pflugscharen 3, die an Seitenplatten 7, 8 angeordnet sind, die ihrerseits an einem Hohlprofil (9) befestigt sind, **dadurch gekennzeichnet,** daß
- sich das Hohlprofil (9) zu seinem rückwärtigen Ende hin leicht verjüngt,
- die Seitenplatten (7,8) den verjüngten Teil des Hohlprofils (9) umgeben und
- eine zu dem leicht verjüngten Teil des Hohlprofils (9) komplementäre Öffnung bilden, so daß der leicht verjüngte Teil des Hohlprofils (9) als Keil fungiert und einen Preßsitz zwischen dem Hohlprofil (9) und den Seitenplatten (7,8) gewährleistet.

2. Pflugbalken nach Anspruch 1, **gekennzeichnet durch** einen durchgehenden, das Hohlprofil (9) und Teile der Seitenplatten (7,8) durchragenden, gegen eine axiale Bewegung zwischen dem Hohlprofil (9) und den Seitenplatten (7,8) sichernden Bolzen (21).

3. Pflugbalken nach Anspruch 1 mit Schlitzen (10,11,12,13) in jeder Seitenplatte (7, 8), die eine freie Kante (18) mit dem gleichen Winkel wie der verjüngte Teil des Hohlprofils (9) aufweisen, die eine Auflage für den leicht verjüngten Teil des Hohlprofils (9) bildet.

4. Pflugbalken nach Anspruch 3, **dadurch gekennzeichnet,** daß Zwischenplatten (19,20) zwischen den freien Kanten (18) der in den Seitenplatten (7,8) befindlichen Schlitze und dem leicht verjüngten Teil des Hohlprofils (9) angeordnet sind.

5. Pflugbalken nach einem oder mehreren der Ansprüche 1 bis 4, **gekennzeichnet durch** herkömmliche Scheerbolzen (5 oder 6).

6. Pflugbalken nach einem oder mehreren der Ansprüche 1 bis 5, **gekennzeichnet durch** herkömmliche Polster/Federelemente (22 und/oder 23).

## Revendications

1. Poutre de charrue, en particulier pour une charrue réversible, comprenant :
des supports de soc de charrue (4,4') pour fixation de socs de charrue (3) ;
les supports de soc de charrue (4,4') étant fixés entre des plaques latérales (7,8) qui sont ellesmêmes fixées à un profilé creux (9) ; caractérisée en ce que :
le profilé creux (9) est légèrement effilé vers son extrémité arrière ;
les plaques latérales (7,8) sont configurées de manière à entourer la partie effilée du profilé creux (9) ; et
les plaques latérales (7,8) définissent une ouverture complémentaire de la partie légèrement effilée du profilé creux (9) de sorte que ladite partie légèrement effilée du profilé creux (9) agit comme un coin et assure une liaison par pression entre le profilé creux (9) et les plaques latérales (7,8).

2. Poutre de charrue selon la revendication 1, comprenant en outre un boulon traversant (21) qui traverse ledit profilé creux (9) et des parties desdites plaques latérales (7,8) ;
le boulon traversant (21) empêchant un mouvement axial entre le profilé creux (9) et les plaques latérales(7,8).

3. Poutre de charrue selon la revendication 1, dans lequel des fentes (10,11,12,13) sont formées dans chaque plaque latérale (7,8) ;
chaque fente (10,11,12,13) ayant un bord libre (18) disposé suivant le même angle que la partie effilée du profilé creux (9) ; et
chaque bord libre (18) étant formé de manière à servir d'appui pour la partie légèrement effilée du profilé creux (9) de la poutre de charrue.

4. Foutre de charrue selon la revendication 3, caractérisée en ce que des plaques intermédiaires (19,20) sont placées entre les bords libres (18) des fentes des plaques latérales (7,8) et la partie légèrement effilée du profilé creux (9).

5. Poutre de charrue selon une ou plusieurs des revendications précédentes, caractérisée en ce que la poutre de charrue est équipée de boulons de cisaillement (5 ou 6), connus en eux-mêmes.

6. Poutre de charrue selon une ou plusieurs des revendications précédentes, caractérisée en ce que la poutre de charrue est équipée d'éléments de coussinet/ ressort (22 et/ou 23), connus en eux-mêmes.
